**Europäisches Patentamt**

(19) **European Patent Office**

**Office européen des brevets**

(11) Numéro de publication: **0 1 1 9 1 1 1**
**B1**

(12) **FASCICULE DE BREVET EUROPEEN**

(45) Date de publication du fascicule du brevet:
**13.05.87**

(21) Numéro de dépôt: **84400170.1**

(22) Date de dépôt: **26.01.84**

(51) Int. Cl.⁴: **B 01 D 33/04**

(54) Filtre à bande comportant un dispositif d'aspiration d'air.

(30) Priorité: **04.02.83 FR 8301804**

(43) Date de publication de la demande:
**19.09.84 Bulletin 84/38**

(45) Mention de la délivrance du brevet:
**13.05.87 Bulletin 87/20**

(84) Etats contractants désignés:
**DE FR GB IT SE**

(56) Documents cités:
**DE - B - 1 223 806**
**FR - A - 362 194**
**FR - A - 2 508 070**
**GB - A - 793 540**
**US - A - 1 688 216**

(73) Titulaire: **Gaudfrin, Guy, 45, avenue de la Liberté,**
**F-78100 Saint-Germain-en-Laye (FR)**

(72) Inventeur: **Gaudfrin, Guy, 45, avenue de la Liberté,**
**F-78100 Saint-Germain-en-Laye (FR)**

(74) Mandataire: **Descourtieux, Philippe et al, CABINET**
**BEAU de LOMENIE 55 rue d'Amsterdam, F-75008 Paris**
**(FR)**

ACTORUM AG

## Description

On connaît déjà par exemple par le brevet GB-A-793540 divers types de filtres à bande notamment pour l'extraction d'une liqueur d'une suspension.

De tels filtres comprennent en général une bande transporteuse sans fin dont la surface externe est pourvue de canaux transversaux définis par des nervures transversales. Cette bande est entraînée suivant un mouvement uniforme par tout moyen approprié mais son trajet est tel que son brin supérieur est sensiblement horizontal.

Au cours de son mouvement, la surface supérieure du brin supérieur de la bande sans fin et plus précisément les bords supérieurs des nervures transversales viennent en contact avec une toile filtrante ou analogue, elle-même animée d'un mouvement identique à celui de la bande. Les canaux transversaux sont alors recouverts par la toile filtrante et la suspension à filtrer est amenée sur le filtre ainsi constitué par tout moyen approprié.

Des trous d'évacuation sont prévus dans le fond des canaux transversaux et une goulotte d'évacuation, disposée sous le brin supérieur de la bande, reçoit la liqueur filtrée et la dirige, grâce à des canalisations, vers des ballons récepteurs. Toutefois la liqueur filtrée emporte une certaine quantité d'air provenant de diverses origines. Il est donc prévu, dans la zone supérieure des ballons récepteurs, un raccordement à un dispositif de mise sous vide qui permet d'aspirer l'air ainsi entraîné.

Les filtres connus dont la structure vient d'être rappelée présentent cependant divers inconvénients. D'une part les canalisations d'évacuation de la liqueur filtrée doivent véhiculer une grande quantité d'air et leurs dimensions sont par conséquent importantes. D'autre part, la puissance du dispositif de mise sous vide doit être élevée et, malgré les dispositions prises à cet égard, on constate que la filtration à travers le gâteau filtrant s'effectue dans de mauvaises conditions, notamment à l'extrémité aval du brin supérieur de la bande transporteuse. Il en résulte que le rendement du filtre, malgré l'utilisation d'une filtration méthodique à contrecourant, reste relativement faible, et surtout varie au cours de l'utilisation.

D'autre part, on a déjà eu l'idée, pour éviter les inconvénients qui viennent d'être mis en évidence, de séparer l'air du liquide ayant traversé une paroi filtrante ou analogue. Les brevets US-A-1668216, DE-B-1223806 et FR-A-362194 mettent en oeuvre cette idée dans le cas des machines pour la production du papier.

Toutefois, les dispositions qu'ils enseignent ne suffisent pas pour améliorer de façon décisive et substantielle la qualité et l'efficacité de la filtration réalisée dans les filtres à bande. Il est en effet nécessaire de poursuivre l'idée évoquée plus haut et d'évacuer l'air du liquide filtré le plus tôt possible après son passage dans la toile filtrante.

L'invention a pour objet un filtre à bande du type ci-dessus rappelé et présentant divers perfectionnements destinés à remédier aux inconvénients signalés.

Selon une caractéristique essentielle de l'invention, la bande sans fin présente, dans certaines nervures transversales, au moins un passage d'aération communiquant avec la zone supérieure d'au moins un canal transversal adjacent par des passages ménagés sur la crête desdites nervures transversales.

Grâce à cette disposition la face inférieure de la toile filtrante est directement soumise au vide ce qui améliore l'évacuation du liquide filtré et notamment la régularité de la filtration tout le long de la bande. En outre, l'air entraîné par le liquide filtré à travers les trous d'évacuation de la bande transporteuse peut être prélevé dans la zone supérieure de la goulotte de sorte que les canalisations d'évacuation ne véhiculent qu'un liquide exempt d'air et peuvent dont présenter des dimensions relativement faibles; de plus les ballons récepteurs ne sont plus indispensables.

L'invention sera mieux comprise et divers caractéristiques secondaires ainsi que d'autres avantages apparaîtront dans la description qui va suivre d'un mode de réalisation.

A cet effet, on se référera aux dessins annexés dans lesquels:

la fig. 1 est une coupe longitudinale schématique en élévation d'un filtre à bande sans fin selon l'invention;

la fig. 2 est une vue en coupe transversale selon II–II de la fig. 1;

la fig. 3 est une vue en coupe transversale d'une partie de la fig. 1, analogue à la fig. 2 mais tracée à plus grande échelle;

la fig. 4 est une coupe selon III–III de la fig. 3, et

la fig. 5 est une vue de dessus de la partie centrale de la bande sans fin dans le cas d'une variante avantageuse de réalisation.

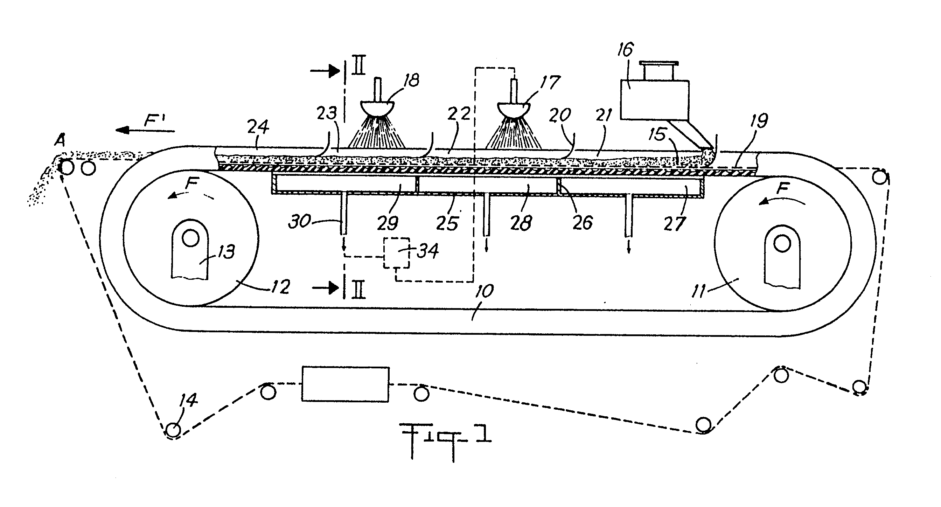

Si l'on se reporte à la fig. 1, on voit que le filtre comporte une bande sans fin 10 enroulée autour de deux tambours 11 et 12, l'un d'entre eux étant entraîné dans le sens des flèches F. Les tambours sont montés sur un châssis 13 représenté en partie; un des tambours peut être déplacé pour ajuster la tension de la bande.

La bande 10, en élastomère naturel ou synthétique, présente un brin horizontal supérieur susceptible d'être recouvert par une toile filtrante 19 ou analogue, perméable au liquide, entraînée dans la direction F' du déplacement de la bande. Cette toile 19 est supportée par un certain nombre de rouleaux de support, de guidage et de tension 14 dans son parcours allant de l'extrémité aval du brin supérieur jusqu'à la zone A de déchargement du gâteau et ensuite jusqu'au retour sur ce brin supérieur.

La suspension 15 a` filtrer est déposée à partir d'un alimentateur 16 qui est suivi, dans la direction du mouvement de la bande 10, par des distributeurs 17 et 18.

La surface au-dessus de la toile 19 est divisée par plusieurs barrières transversales 20 en une zone d'extraction 21 en dessous de l'alimentateur 16, et en une ou plusieurs zones de lavage 22 et 23 en dessous des distributeurs 17 et 18 et enfin en une zone d'essorage 24.

Le liquide de lavage entrant dans le distributeur répartiteur 18 produit en traversant la zone 23 un filtrat de lavage qui alimente le distributeur 17 de la zone 22 réalisant ainsi un lavage à contre-courant. On pourrait bien entendu ménager plus de deux zones de lavage selon le même processus.

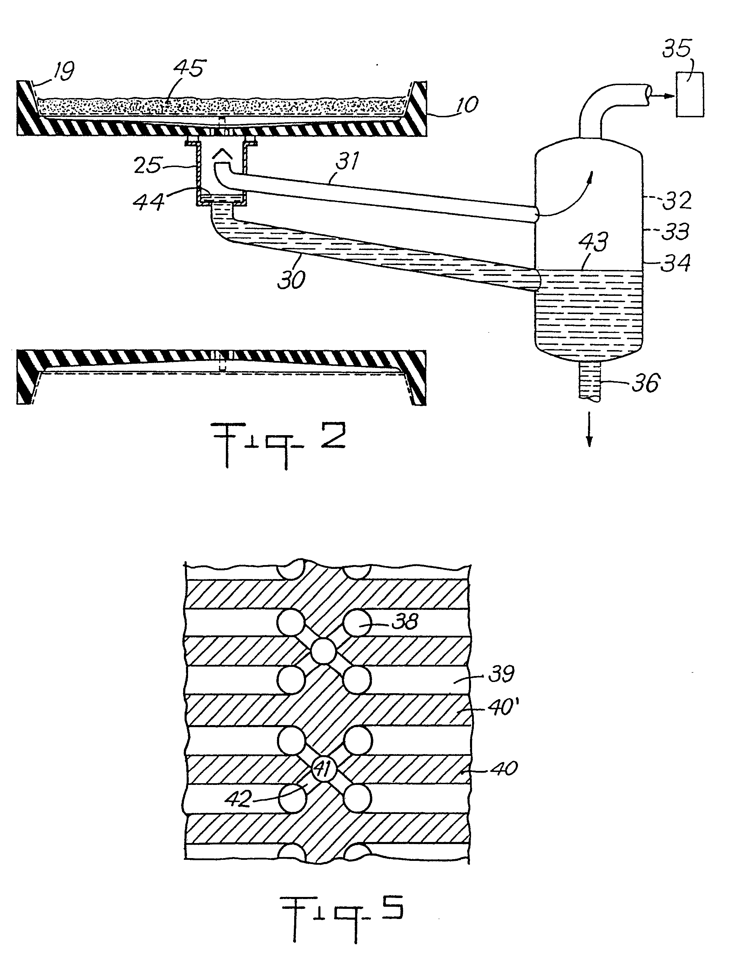

Une goulotte 25, ouverte à la partie supérieure et visible plus particulièrement sur les fig. 2, 3, 4, est située dans la partie centrale en dessous du brin supérieur de la bande 10 et est divisée intérieurement par des séparations transversales 26 en trois compartiments 27, 28, 29 se vidant respectivement par les canalisations d'évacuation 30 dans des ballons récepteurs 32, 33 et 34. En plus des canalisations d'évacuation 30 du liquide filtré sont prévus des conduits d'aspiration d'air 31 dont le rôle sera expliqué plus loin. Ils relient la zone supérieure de la goulotte 25, dans chacun des compartiments 27, 28, 29 à la zone supérieure de chacun des ballons récepteurs 32, 33, 34 respectivement. De préférence et comme représenté sur la fig. 2, ces conduits d'aspiration présentent une pente et leur extrémité, du côté des ballons récepteurs, est disposée de façon qu'elle soit toujours au-dessus du niveau libre 43 du liquide dans ces ballons, quelles que soient les conditions de fonctionnement. Ainsi ces conduits sont toujours en communication directe, sans perte de charge, avec le dispositif de mise sous vide 35, dont il va être question maintenant.

La zone supérieure des ballons récepteurs 32, 33, 34 est en effet reliée à un dispositif de mise sous vide représenté schématiquement en 35 cependant qu'une tubulure inférieure 36 assure l'évacuation de la liqueur filtrée. La liqueur filtrée extraite de la zone 21 par le ballon 32 ne présente pratiquement aucune dilution, cependant que la liqueur filtrée extraite des zones 22 et 23 par les ballons 33 et 34 respectivement présente une dilution augmentant progressivement.

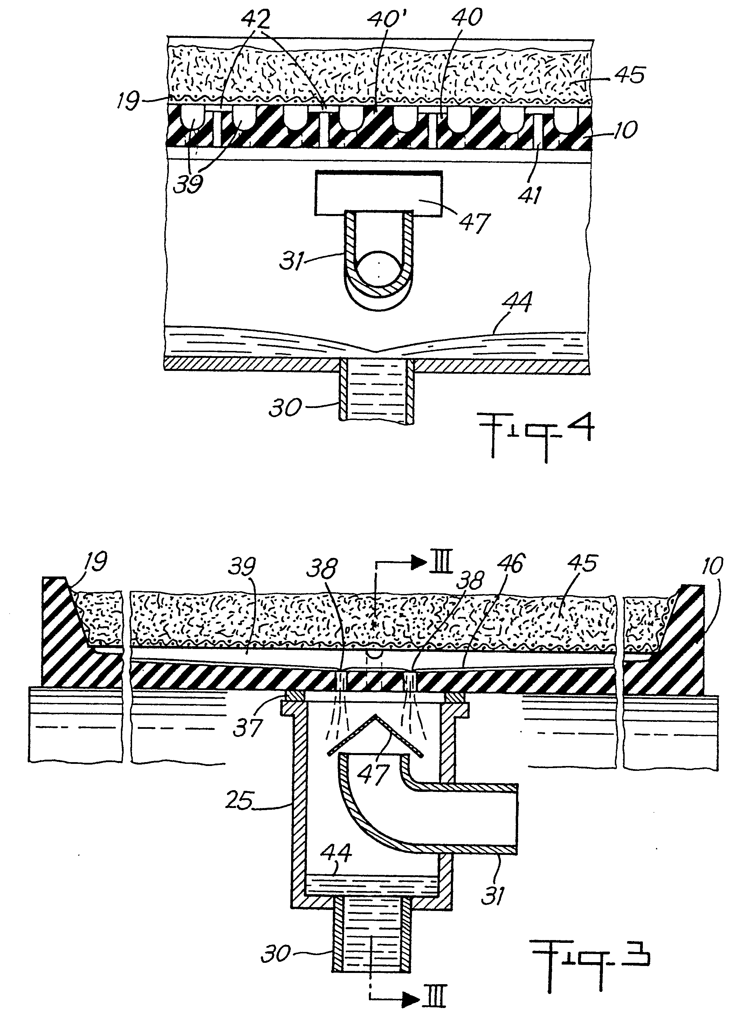

La goulotte 25, convenablement supportée sous le brin supérieur de la bande 10, est pourvue sur les bords de son ouverture supérieure de baguettes antifriction en Téflon ou autre matériau convenable 37, en contact avec la surface de la bande comme représenté sur la fig. 3.

Entre ces baguettes 37 débouchent des trous de vidange 38, répartis suivant deux rangées longitudinales visibles sur la fig. 3 et percés dans le fond des canaux transversaux 39 qui sont formés sur la face extérieure de la bande. Comme on le voit sur les figures, ces canaux sont recouverts par la toile 19 tout le long du brin supérieur de la bande.

Les canaux transversaux 39 sont séparés par des nervures 40, 40' sur lesquelles reposent la toile 19 comme on le voit sur la fig. 4. Une nervure 40 sur deux est traversée par un trou d'aération 41 débouchant sur la face interne de la bande 10, dans la goulotte 25. Des passages horizontaux 42 pratiqués dans les crêtes des nervures 40 assurent d'autre part la communication du volume des canaux transversaux avec celui des trous 41 et, par eux, avec la goulotte 25.

Les nervures intermédiaires 40' non perforées évitent en revanche toute circulation longitudinale d'air le long de la bande 10.

Chaque compartiment 27, 28, 29 de la goulotte 25 reçoit les liqueurs extraites s'écoulant par les rangées de trous d'évacuation 38 des canaux 39 et les dirigent vers les ballons récepteurs 32, 33, 34 respectivement par l'intermédiaire des canalisations 30. L'air qui peut entrer dans la goulotte 25 en traversant le gâteau 45 ainsi que le gaz ou la vapeur qui peuvent s'y former par dégazage ou auto-évaporation due à la dépression sont évacués par chacun des conduits d'aspiration 31.

Ainsi les compartiments 27, 28, 29 de la goulotte 25 sont en permanence remplis d'air, de gaz ou de vapeur en équilibre avec le vide partiel créé par le dispositif 35 au-dessus du niveau 44 du liquide extrait s'écoulant dans le fond de chaque compartiment. D'autre part, il existe toujours un drainage efficace des canaux transversaux 39 par les trous d'aération 41 et les passages 42, si le niveau du liquide 46 dans ces canaux s'élève anormalement. De même lorsqu'un grand débit d'air traverse le gâteau 45 et pénètre dans un canal 39, il s'évacue par les trous d'aération 41.

Grâce à ces dispositions seul de liquide passe par les trous d'évacuation 38 des canaux 39 tandis que l'air entre ou sort par les trous d'aération 41. Les canaux 39 sont ainsi maintenus presque vides ce qui, d'une part, supprime l'effet néfaste du transfert de liqueur entre zones sur le rendement du lavage à contre-courant et, d'autre part, maintient à une valeur très faible la perte de charge dans chaque canal 39 et la perte de charge dans les trous d'évacuation 38.

De préférence, l'ouverture de l'extrémité des conduits d'aspiration 31 dans la goulotte 25 est disposée sous les trous d'évacuation 38 ainsi qu'on le voit sur les fig. 3 et 4 et un déflecteur 47 protège cette ouverture contre les entrées de liqueur.

La fig. 5 représente une variante de réalisation dans laquelle les canaux transversaux 39 sont en deux parties isolées l'une de l'autre. On y retrouve les trous d'aération 41 communiquant par le haut avec les canaux 39 par les passages horizontaux 42 pratiqués dans la crête de la nervure 40. Le fonctionnement du filtre est le même que celui décrit précédemment mais la disposition proposée présente l'avantage d'autoriser la présence de trous d'aération 41 d'un diamètre au moins égal à la largeur des nervures 40.

**Revendications**

1. Filtre pour l'extraction d'une liqueur d'une suspension, comprenant une bande transporteuse sans fin (10) dont la surface externe est pourvue de canaux transversaux (39) définis par des nervures transversales (40), le brin supérieur de ladite bande étant sensiblement horizontal et susceptible d'être recouvert d'une toile filtrante (19) ou analogue, reposant sur le bord supérieur des nervures transversales et recevant la suspension, cependant que des trous d'évacuation (38) sont ménagés dans le fond desdits canaux transversaux (39) de la bande et qu'une goulotte d'évacuation (25) est disposée sous la face inférieure dudit brin supérieur de la bande et est munie d'une part canalisations (30) prévues dans son fond inférieur et d'autre part d'au moins un conduit d'aspiration d'air (31) reliant sa zone supérieure à un dispositif de mise sous vide (35), caractérisé en ce que la bande (10) présente, dans certaines nervures transversales (40), au moins un passage d'aération (41) communiquant avec la zone supérieure d'au moins un canal transversal adjacent par des passages (42) ménagés sur la crête desdites nervures (40).

2. Filtre selon la revendication 1, caractérisé en ce que les canaux transversaux (39) de la bande sont en deux parties séparées ayant chacune un trou d'évacuation (38), cependant que les trous d'aération (41) ont un diamètre au moins égal à la largeur de la nervure (40) séparant lesdits canaux.

**Patentansprüche**

1. Filter zur Extraktion einer Lösung aus einer Suspension mit einem Endlostransportband (10), dessen äussere Oberfläche mit Querkanälen (39) versehen ist, die durch quer verlaufende Rippen (40) definiert sind, wobei der obere Trum des Bandes im wesentlichen horizontal verläuft und mit einem Filtertuch (19) oder ähnlichem bedeckt sein kann, das auf dem oberen Rand der transversalen Rippen ruht und die Suspension aufnimmt, wobei Ablasslöcher (38) in den Boden der Querkanäle (39) des Bandes eingearbeitet sind und wobei. ein Auslauf (25) unter der unteren Fläche des oberen Trums des Bandes angeordnet und einerseits mit Leitungen (30) in seinem unteren Boden einerseits und andererseits mit mindestens einer Luftansaugleitung (31) versehen, die dessen oberen Bereich mit einer Vakuumpumpe (35) verbindet, dadurch gekennzeichnet, dass das Band (10) in bestimmten Quernuten (40) mindestens eine Belüftungspassage (41) aufweist, die mit einem oberen Bereich mindestens eines benachbarten Querkanals über Passagen (42) in Verbindung steht, die in die Kämme der Rippen (40) eingearbeitet sind.

2. Filter nach Anspruch 1, dadurch gekennzeichnet, dass die Querkanäle (39) des Bandes in zwei Teile getrennt sind, die jeweils ein Ablassloch (38) aufweisen, wobei die Belüftungslöcher (41) einen Durchmesser haben, der mindestens gleich der Breite der Rippe (40) ist, die die Kanäle voneinander trennt.

**Claims**

1. A filter for extracting a liquor from a suspension, comprising an endless carrier belt (10) whose upper surface is provided with transverse channels (39) formed by a plurality of transverse ribs (40), the upper side of said belt being substantially horizontal and designed to be covered up by a filtering fabric (19) or the like, resting on the upper side of the transverse ribs and receiving the suspension, whereas draining holes (38) are provided at the bottom of said transverse channels (39) of the belt, and a draining trough (25) is provided under the lower face of said belt upper side and is equipped with, on the one hand, pipes (30) provided at its lower bottom, and on the other hand with at least an air suction pipe (31) connecting its upper region to a vacuum-creating device (35), characterized in that the belt (10) comprises, in some transverse ribs (40), at least one ventilation hole (41) communicating with the upper zone of at least one adjacent transverse channel by passages (42) formed in a crest of said ribs (40).

2. A filter according to claim 1, characterized in that the transverse channels (39) of the belt are in two separate parts, each part having its own draining hole (38), whereas the ventilation holes (41) have a diameter at least equal to a width of the rib (40) separating said channels.

Fig.1

Fig. 2

Fig. 5

0119111

Fig-4

Fig-3